# EUROPÄISCHE PATENTSCHRIFT

(11) **EP 0 606 573 B1**
(45) Veröffentlichungstag und Bekanntmachung des Hinweises auf die Patenterteilung: **05.06.1996**
(21) Anmeldenummer: 93119231.4
(22) Anmeldetag: 29.11.1993
(51) Int. Cl.: B01D 47/06, C21B 7/00

(54) **Verfahren zur Kühlung und Reinigung von ultrafeine Partikel enthaltendem Gas, insbesondere Gichtgas oder Generatorgas und Vorrichtung zu seiner Durchführung**
Process for cooling and cleaning of gases containing small particles, especially of melter gases or generator gases and installation therefor
Procédé pour refroidir et purifier du gaz contenant de fines particules, spécialement gaz de geulart ou d'un générateur de gaz et installation à cette fin

(30) Priorität: 30.11.1992 DE 4240196
(43) Veröffentlichungstag der Anmeldung: 20.07.1994
(73) Patentinhaber: DEUTSCHE VOEST-ALPINE INDUSTRIEANLAGENBAU GMBH, D-40219 Düsseldorf (DE); VOEST-ALPINE INDUSTRIEANLAGENBAU GMBH, A-4020 Linz (AT)
(72) Erfinder: Vuletic, Bogdan, D-40213 Düsseldorf (DE)
(74) Vertreter: Pfenning, Meinig & Partner

(56) Entgegenhaltungen:
- AT-A- 338 842
- FR-A- 2 683 228

## Beschreibung

Die Erfindung betrifft ein Verfahren zur Kühlung und Reinigung von ultrafeine Partikel enthaltendem heißem Gas, wie aus einer Kohlevergasungsanlage, in einem Einschmelvergaser erzeugtes Generatorgas oder aus einer Schmelzreduktionsanlage stammendes Gichtgas, in einem Packungsvorwäscher und anschließend in einem Ringspaltwäscher, sowie eine Vorrichtung zur Durchführung des Verfahrens.

Die Gase aus einer Schmelzreduktionsanlage oder einem Kohle- oder Einschmelzvergaser enthalten große Mengen an ultrafeinen Staubpartikeln, d.h. Staubpartikel mit einer Partikelgröße um 1 µm, die nur sehr schwer in einem Naßwäscher bei Verwendung geeigneter Wäschertypen, wie Ringspaltwäscher, und unter sehr hohen Druckverlusten bzw. Gasgeschwindigkeiten ausgeschieden werden können, weil sie fast die Eigenschaften eines Gases aufweisen.

Wenn man aus Gründen des Umweltschutzes und wegen des Bedarfs großer Mengen auf die Zugabe eines Benetzungsmittels verzichtet, sind Staubgehaltwerte unter 5 mg/Nm³ selbst bei erhöhtem Energieaufwand kaum erreichbar.

Da es sich beim Gas aus den erwähnten Anlagen um ein Exportgas mit relativ hohem Heizwert handelt, das sinnvoll in einer Gasverbrennungsturbine mit sehr hohem Wirkungsgrad von ca. 46% für die Stromerzeugung nutzbar gemacht werden kann, soll der Staubgehalt nach der Wäsche unter 5mg/nm³ liegen.

Aufgabe der Erfindung ist es deshalb, das eingangs genannte Verfahren so zu verbessern, daß das gereinigte Gas einen Staubgehalt von unter 5 mg/Nm³ erreicht, ohne daß der für die Durchführung des Verfahrens erforderliche Energieaufwand wesentlich ansteigt.

Die Lösung dieser Aufgabe besteht erfindungsgemäß darin, daß in einer dem Packungsvorwäscher vorgeschalteten Sättigungs-Waschstufe das heiße Gas unter weitgehender Nutzung seiner fühlbaren Wärme durch Verdampfung von zugeführtem Heißwasser zumindest annähernd an seine Sättigungsgrenze mit Wasserdampf angereichert und dadurch abgekühlt wird und die Staubpartikel benetzt werden, und daß in nachfolgenden Kühl- und Waschstufen durch eine schnelle Auskondensation des Wasserdampfs die Staubabscheidung unterstützt wird.

Es wird also der in Form fühlbarer Wärme vorhandene Energiegehalt des heißen Gases unter gleichzeitiger Abkühlung des Gases zur Verdampfung des Zugegebenen Heißwassers ausgenützt. Durch die große Dampfmenge werden die ultrafeinen Staubpartikel zur Vorbereitung ihrer Auscheidung in sehr hohem Ausmaß benetzt, weshalb sich ein sehr hoher Reinheitsgrad des Gases erreichen läßt.

Nach einer vorteilhaften Ausgestaltung wird in der Sättigungs-Waschstufe zur Abkühlung des heißen Gases bis zur Sättigungstemperatur Heißwasser von mindestens 60°C zugeführt. Dadurch wird die fühlbare Wärme des Gases nicht weitgehend zur Temperaturerhöhung des Wassers eingesetzt, wie bei der Zugabe von Vorlaufwasser von etwa 30°C, sondern zu dessen Verdampfung, wodurch der anzustrebende hohe Wasserdampfgehalt des Gases erreicht wird. Unter Annahme einer Gaseintrittstemperatur von 300°C, einer Sättigungstemperatur von 105°C unter erhöhtem Druck von 2 bar, einer Heißwassermenge von 1 Liter mit 70°C pro 1 Nm³ Gas und einer Erwärmung des Wassers von 70°C auf 105°C erhöht sich der Wasserdampfgehalt des Gases um ca. 5%. Bei üblicher Verwendung von kaltem Wasser mit einer Temperatur von 30°C wird theoretisch sogar etwas Dampf auskondensiert. Bei einer Gastemperatur von 500°C wird sich unter sonst gleichen Bedingungen der Wasserdampfgehalt des Gases um ca. 20 % erhöhen.

Beim schnellen Auskondensieren eines Teils des Dampfes im Packungswäscher und anschließend im Ringspalt-Wäscher und in Kontakt mit kaltem oder kälterem Wasser dienen die benetzten Staubpartikel als Kondensationszellen, so daß sie auch zusammen mit gebildeten Tropfen ausgeschieden werden.

Durch die erfindungsgemäße Verfahrensweise läßt sich der Abscheidegrad so weit verbessern, daß der gewünschte Staubgehalt von unter 5 mg/Nm³ erreicht wird.

Neben der Erhöhung des Dampfgehaltes des Gases wirkt sich auch eine lange Dauer des Kontaktes zwischen Heißwasser, Dampf und Staubpartikeln in der Sättigungs-Waschstufe positiv auf den Wascheffekt aus. Aus diesem Grund wird nach einer vorteilhaften Ausgestaltung das Heißwasser in die das heiße Gas abführende Leitung möglichst nahe am Gasauslaß der das Gas erzeugenden Einrichtung eingebracht.

Außerdem erfolgt nach einer weiteren sehr vorteilhaften Ausführungsform die Verdampfung des Heißwassers, während das heiße Gas und das Heißwasser in der Sättigungs-Waschstufe im Gleichstrom durch eine vertikal nach unten führende Leitung geführt werden. Dabei wird vorteilhaft die Höhe der - wegen des Gasaustritts am oberen Ende der gaserzeugenden Einrichtungen - auf relativ hohem Niveau ankommenden Leitung für das heiße Gas ausgenützt, um das heiße Wasser auf diesem hohen Niveau zuzugeben, so daß es eine große Fallhöhe gemeinsam mit dem heißen Gas durchströmt, wodurch unter Ausnützung der vorgegebenen Situation mit geringem Raumbedarf eine lange Kontaktstrecke erhalten wird, in der unter der Einwirkung der kinetischen Energie des fallenden Wassers und der Gasgeschwindigkeit das Wasser zerstäubt wird und dadurch die Waschwirkung weiter verbessert wird. Vorzugsweise wird das heiße Gas und das Heißwasser durch die vertikale Leitung einem Ringspalt-Wäscher zugeführt, in dem bereits ein großer Teil der im vertikalen Rohr benetzten Staubpartikel ausgeschieden wird.

Nach einer zweckmäßigen Ausführungsform folgen auf die Sättigungs-Waschstufe zwei weitere Kühl- und Waschstufen, wobei der letzten Kühl- und Waschstufe vorzugsweise gereinigtes, kaltes Wasser zugeführt wird, das nach einer weiteren bevorzugten Ausgestaltung nach dem Durchqueren dieser Kühl- und Waschstufe der mittleren Kühl- und Waschstufe zugeführt wird, wodurch sich eine Vorwärmung ergibt. Zweckmäßigerweise wird zur Steigerung dieses Effekts ein großer Teil des der mittleren Kühl- und Waschstufe zugeführten Wassers nach dem Durchqueren dieser mittleren Stufe der ersten Sättigungs-Waschstufe zugeführt.

Die vorteilhafte mehrmalige Verwendung des Waschwassers führt zur Reduzierung der erforderlichen Vorlaufwassermenge und gleichzeitig zur Erhöhung der Rücklaufwassertemperatur. Eine um 10°C höhere Rücklaufwassertemperatur und eine kleinere Umlaufwassermenge reduziert sehr stark die Löslichkeit von Gasen bzw. die insgesamt aufgelöste Gasmenge, so daß viel weniger Gase, vor allem vom stark toxischen Kohlenmonoxid, mit dem Wasser aus dem System ausgetragen werden.

Erfindungsgemäß ist eine Vorrichtung zur Durchführung des beschriebenen Verfahrens mit einem im Gasweg angeordneten Packungswäscher und einem nachfolgenden Ringspalt-Wäscher derart ausgebildet, daß dem Pakkungsvorwäscher ein langes, vertikales, abwärts führendes Sättigungsrohr mit einem am oberen Ende des Sättigungsrohrs angeschlossenen Heißwasseranschluß und einem am unteren Ende des Sättigungsrohrs angeordneten Ringspalt-Wäscher vorgeschaltet ist, dessen Austrittsende unterhalb der Packung des Packungswäschers ausmündet.

Dabei besteht eine vorteilhafte Ausführungsform darin, daß auf die letzte Waschstufe zwei in Serie angeordnete Tropfenabscheider folgen.

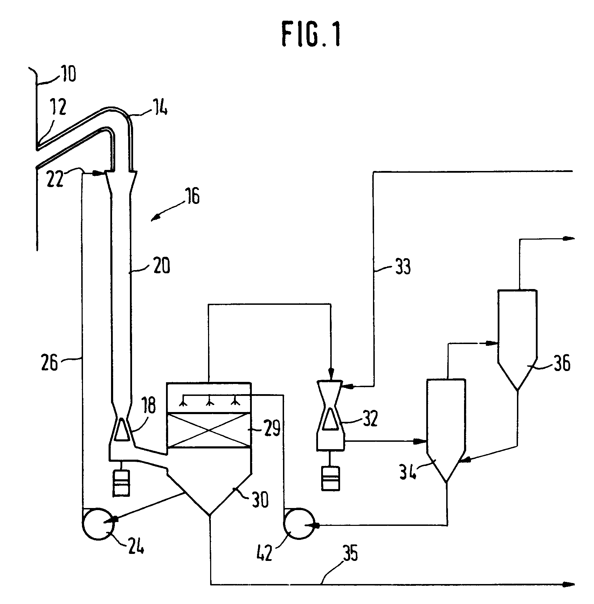

Anhand der nun folgenden Beschreibung eines in der Zeichnung dargestellten Ausführungsbeispiels der Erfindung wird diese näher erläutert.

Die Figur zeigt in schematischer Darstellung eine Anordnung zur Durchführung des erfindungsgemäßen Verfahrens im Anschluß an einen Heißgaserzeuger.

Ein nur symbolisch dargestellter Heißgaserzeuger 10 ist nahe seinem oberen Ende mit einem Gasauslaß 12 versehen, von dem aus ein Krümmer 14 die Verbindung zu einer Sättigungs-Wasch-Stufe 16 in Form eines vertikal nach unten zu einem ersten Ringspalt-Wäscher 18 führenden Rohrs 20 herstellt. Am oberen Ende des Rohrs 20 ist ein Heißwasseranschluß 22 angeordnet, dem von einer Heißwasserpumpe 24 über ein Rohr 26 Heißwasser von z.B. 70°C zugeführt wird. Während das Heißwasser gemeinsam mit dem heißen Gas im Gleichstrom das Rohr 20 durchströmt, entzieht es dem heißen Gas fühlbare Wärme, wodurch eine große Dampfmenge gebildet wird und das Gas zumindest annähernd bis an seine Sättigungsgrenze mit Wasserdampf angereichert wird, wodurch die vom Gas mitgeführten ultrafeinen Partikel zu einem großen Teil benetzt werden und bei der in den nachfolgenden Stufen erfolgenden Kondensation des Wassers als Keimzellen für die Tropfenbildung dienen können und zusammen mit den Tropfen im Kondensatz ausgeschieden werden.

Durch die kinetische Energie des durch das lange Rohr 20 fallenden Wassers und die Einwirkung der Gasgeschwindigkeit wird das Wasser im Rohr 20 zerstäubt, bevor es am unteren Rohrende aus Konus und Ringspaltelement des Wäschers 18 auftrifft, wodurch es zum hohen Abscheidungsgrad des Ringspalt-Wäschers 18 beiträgt.

Die Mischung aus Gas, Staub und Wasser strömt anschließend in den unterhalb der Packung 29 gelegenen Teil eines Packungswäschers 30 ein, in dem das in der letzten Kühl- und Waschstufe vorgewärmte Waschwasser als Kühl- und Waschwasser verwendet wird. Ein großer Teil des im Gas enthaltenen Wasserdampfs kondensiert in der Packung 29 aus und ein weiterer großer Teil des Staubs wird hier ausgeschieden.

Eine Heißwasserpumpe 24 fördert einen Teil des inzwischen auf etwa 60 - 70°C vorgewärmten Wassers zum Heißwasseranschluß 22, der Rest des Wassers wird über den Rücklauf 35 der Aufbereitung zugeführt.

Unmittelbar vor dem Eintritt des den Packungswäscher 30 mit noch relativ hohem Dampfgehalt verlassenden Gases in den Venturispalt eines zweiten Ringspalt-Wäschers 32 wird eine große Menge des über eine Vorlaufleitung 33 zugeführten, gereinigten, kalten Wassers unter hohem Druck in feine Partikel verrieselt, die in den Venturiteil des Ringspalt-Wäschers 32 durch sehr hohe Gasgeschwindigkeit in noch feinere Partikel zerstäubt werden. Dabei kommt es zu einem sehr intensiven Kontakt zwischen Staub- und Wasserpartikeln, die dann in einem nachgeschalteten Tropfenabscheider 34 ausgeschieden werden.

Das sehr schnelle Auskondensieren des Wasserdampfes in diesem Wäscher unterstützt die Anhaftung der Staub- an den Wasserpartikeln und trägt dadurch zur Erhöhung des Abscheidungsgrades dieses Wäschers 32 bei.

Die mehrfache Verwendung des Vorlaufwassers läßt sich nicht nur zur Erhöhung des Wascheffekts der Gaswäsche positiv ausnützen, indem das kalte Vorlaufwasser stufenweise erhitzt und in der ersten Waschstufe 16 zum Teil verdampft wird, sondern diese Betriebsweise ermöglicht es auch, das Waschwasser um mindestens 10°C über dem normalen Wert von ca 60°C zu erhitzen und dadurch die im Kreislauf befindliche Wassermenge um bis zu 30% zu reduzieren, was nicht nur zur starken Verringerung der Investitionskosten für die Wasseraufbereitungsanlage führt, sondern die erforderliche Fläche für die Wasseraufbereitungsanlage ebenfalls senkt.

Wenn man berücksichtigt, daß nur die Fläche der Eindicker für eine 100 t/h Roheisenanlage ca. 4000 m² beträgt, wird ersichtlich, was eine Reduzierung der Eindickerfläche auf 3000 m² mit an Vorteil bringt.

Eine kleine Rücklaufwassermenge mit höherer Rücklaufwassertemperatur trägt viel weniger Gas aus der unter Überdruck betriebenen Gaswäsche aus, wodurch viel weniger Kohlenmonoxid im Bereich der Wasseraufbereitungsanlage freigesetzt wird.

Die Erhöhung der Wassertemperatur in der Rücklaufleitung 35 von üblichen 60°C auf 70°C führt bei den erwähnten Gaserzeugungsanlagen nicht zum üblichen Härteausfall und Ablagerungen im Gaswaschsystem, weil die Gase aus Eisenerzreduktionsanlagen einen hohen Kohlendioxidgehalt haben und unter erhöhtem Überdruck von ca. 2 bar auch im heißesten Bereich, d.h. in der ersten Waschstufe 16 und der mittleren Waschstufe 30 viel Kohlendioxid im Wasser gelöst wird. Durch die Auflösung von Kohlendioxid wird der Härteausfall des Wassers auch bei Temperaturen von über 80°C vermieden, so daß keine besonderen Maßnahmen für die Aufbereitung des Zusatzwassers erforderlich sind. Die Verwendung des aufbereiteten Vorlaufwassers für die letzte Waschstufe 32 trägt indirekt zu einem besseren Abscheidungsgrad des Wäschers bei. Bekanntlich wird ein kleinerer Teil der im Gas enthaltenen Wassertropfen im nachgeschalteten Tropfenabscheider 34 nicht ausgeschieden, so daß nach dem Verdampfen dieser Tropfen in den anschließenden Rohrleitungen die im Wasser enthaltenen Feststoffe und gelösten Salze in Staubform überführt werden. Bei so niedrigen Staubgehalten wie unter 5 mg/Nm³ kann dieser zusätzliche Staub aus Wassertropfen den Reingasstaubgehalt wesentlich erhöhen. Aus diesem Grund sind bei der erfindungsgemäßen Vorrichtung der letzten Waschstufe 32 zwei in Serie angeordnete Tropfenabscheider 34 und 36 nachgeschaltet.

Ein weiterer Grund für die Anordnung eines zweiten Tropfenabscheiders 36 ist es, daß das Gas aus Gaserzeugern auf Kohlebasis kleine Mengen von Teer enthält, die im Dauerbetrieb zu Ansätzen an den Wänden führen, die wiederum den Abscheidegrad des Tropfenabscheiders verschlechtern. Bei dem nachgeschalteten Tropfenabscheider 36 ist diese Gefahr viel geringer, da das Gas fast trocken ankommt und einen sehr niedrigen Wassertropfengehalt aufweist.

Das am ersten Tropfenabscheider 34 anfallende Wasser wird über eine Pumpe 42 oberhalb der Packung 29 in den Packungswäscher 30 eingesprüht.

## Patentansprüche

1. Verfahren zur Kühlung und Reinigung von ultrafeine Partikel enthaltendem heißem Gas, wie aus einer Kohlevergasunganlage, aus einem Einschmelzvergaser erzeugtes Generatorgas oder aus einer Schmelzreduktionsnlage stammendes Gichtgas, in einem Packungsvorwäscher und anschließend in einem Ringspaltwascher, **dadurch gekennzeichnet,** daß in einer dem Packungsvorwäscher vorgeschalteten Sättigungs-Waschstufe das heiße Gas unter weitgehender Nutzung seiner fühlbaren Wärme durch Verdampfung von zugeführtem Heißwasser zumindest annähernd an seine Sättigungsgrenze mit Wasserdampf angereichert und dadurch abgekühlt wird und die Staubpartikel benetzt werden, so daß in nachfolgenden Kühl- und Waschstufen durch eine schnelle Auskondensation des Wasserdampfs die Staubabscheidung unterstützt wird.

2. Verfahren nach Anspruch 1, **dadurch gekennzeichnet,** daß in der Sättigungs-Waschstufe zur Abkühlung des heißen Gases bis zur Sättigungstemperatur Heißwasser von mindestens 60°C zugeführt wird.

3. Verfahren nach Anspruch 2, **dadurch gekennzeichnet,** daß das Heißwasser in die das heiße Gas abführende Leitung möglichst nahe am Gasauslaß der das Gas erzeugenden Einrichtung eingebracht wird.

4. Verfahren nach Anspruch 3, **dadurch gekennzeichnet**, daß die Verdampfung des Heißwassers erfolgt, während das heiße Gas und das Heißwasser in der Sättigungs-Waschstufe im Gleichstrom durch eine vertikal nach unten führende Leitung geführt werden.

5. Verfahren nach Anspruch 4, **dadurch gekennzeichnet,** daß das heiße Gas und das Heißwasser durch die vertikale Leitung einem Ringspalt-Wäscher zugeführt werden.

6. Verfahren nach Anspruch 1, **dadurch gekennzeichnet,** daß der letzten Kühl- und Waschstufe (Ringspaltwäscher) gereinigtes, kaltes Wasser zugeführt und das heiße Rücklaufwasser aus der mittleren Waschstufe (Packungsvorwäscher) abgeführt wird.

7. Verfahren nach Anspruch 6, **dadurch gekennzeichnet,** daß das Waschwasser nach der Durchquerung der letzten Kühl- und Waschstufe der mittleren Kühl- und Waschstufe zugeführt wird.

8. Verfahren nach Anspruch 7, **dadurch gekennzeichnet,** daß ein großer Teil des der mittleren Kühl- und Waschstufe zugeführten Wassers nach deren Durchquerung der ersten Sättigungs-Waschstufe zugeführt wird.

9. Verfahren nach den Ansprüchen 7 und 8, **dadurch gekennzeichnet,** daß durch mehrmalige Verwendung das Waschwasser auf eine um ca. 10°C höhere Temperatur über den normalen Wert von ca 60°C erhitzt wird.

10. Vorrichtung zur Durchführung des Verfahrens nach einem der Ansprüche 1 bis 9 mit einem im Gasweg angeordneten Packungswäscher (30) und einem nachfolgenden Ringspalt-Wäscher (32), **dadurch gekennzeichnet,** daß dem Packungsvorwäscher (30) ein langes, vertikales, abwärts führendes Sättigungsrohr (20) mit einem am oberen Ende des Sättigungsrohrs angeschlossenen Heißwasseranschluß (22) und einem am unteren Ende des Sättigungsrohrs (20) angeordneten Ringspalt-Wäscher (18) vorgeschaltet ist, dessen Austrittsende unterhalb der Packung des Packungswäschers (30) ausmündet.

11. Vorrichtung nach Anspruch 10, **dadurch gekennzeichnet,** daß auf die letzte Waschstufe (32) zwei in Serie angeordnete Tropfenabscheider (34, 36) folgen.

## Claims

1. Process for cooling and cleaning hot gases containing ultra-fine particles, for example from a coal gasification unit, generator gas produced in a meltdown gasifier, or furnace gas originating from a melt-reduction unit, in a preliminary packing washer and thereafter in an annular clearance washer, **characterized in that**, in a saturation washing stage upstream of the preliminary packing washer, the hot gas is with extensive utilization of its noticeable heat enriched virtually up to its saturation point with water vapour by evaporation of delivered hot water, and it is thus cooled and dust particles are moistened, so that a separation of dust is aided by quick condensation of the water vapours in subsequent cooling and washing stages.

2. Process according to Claim 1, **characterized in that** hot water of at least 60°C is added to the saturation washing stage for the purpose of cooling the hot gases to saturation temperature.

3. Process according to Claim 2, **characterized in that** the hot water is fed into the pipe which discharges the hot gas and as close as possible to the gas outlet of the gas generating unit.

4. Process according to Claim 3, **characterized in that** the evaporation of hot water takes place whilst the hot gas and the hot water are ducted in uniflow in the saturation washing stage through a vertically downward oriented pipe.

5. Process according to Claim 4, **characterized in that** the hot gas and the hot water are fed through the vertical pipe to an annular clearance washer.

6. Process according to Claim 1, **characterized in that** the last cooling and washing stage (annular clearance washer) is fed cleaned cold water, and the hot return water from the central washing stage (preliminary packing washer) is discharged.

7. Process according to Claim 6, **characterized in that** the washing water is, after having transversed the last cooling and washing stage, delivered to the central cooling and washing stage.

8. Process according to Claim 7, **characterized in that** a large portion of water fed to the central cooling and washing stage is, after having transversed the latter, delivered to the first saturation washing stage.

9. Process according to Claims 7 and 8, **characterized in that** the washing water is heated by repeated application to a temperature of approximately 10°C above a normal temperature of approximately 60°C.

10. Device for carrying out the process according to one of Claims 1 to 9, comprising a packing washer (30) arranged in a gas path and a downstream annular clearance washer (32), **characterized in that** the preliminary packing washer (30) is preceded by a long, vertical and downwardly oriented saturation pipe (20) with a hot-water connection (22) connected at the top end of the saturation pipe and an annular clearance washer (18), which is arranged at the bottom of the saturation pipe (20) and the discharge end of which terminates below the packing of the packing washer (30).

11. Device according to Claim 10, **characterized in that** two drop separators (34, 36) are positioned in series downstream of the last washing stage (32).

## Revendications

1. Procédé destiné au refroidissement et à l'épuration de gaz chaud contenant des particules ultrafines dans un laveur préliminaire à garnissage et ensuite dans un laveur à passage annulaire, tel que du gaz de générateur provenant d'une installation de gazéification de charbon qui est engendré dans un gazéificateur de fusion, ou du gaz de hauts fourneaux provenant d'une installation de réduction de fonderie, caractérisé en ce que, dans un étage de saturation et de lavage disposé on amont du laveur préliminaire à garnissage, le gaz chaud est enrichi en vapeur d'eau, au moins approximativement jusqu'à sa limite de saturation; par évaporation d'eau chaude ajoutée en utilisant largemant sa chaleur sensible, et est donc ainsi refroidi, et que les particules de poussière sont mouillées de telle sorte que la séparation des poussières est favorisée par une condensation rapide de la vapeur d'eau dans des étages de refroidissement et de lavage disposés en aval.

2. Procédé selon la revendication 1, caractérisé en ce que de l'eau chaude à au moins 60°C est ajoutée dans l'étage de saturation et de lavage pour le refroidissement du gaz chaud jusqu'à sa température de saturation.

3. Procédé selon la revendication 2, caractérisé en ce que l'eau chaude est injectée dans la conduite évacuant le gaz chaud à proximité aussi immédiate que possible de la sortie du gaz du dispositif générant le gaz.

4. Procédé selon la revendication 3, caractérisé en ce que l'évaporation de l'eau chaude est effectuée pendant que le gaz chaud et l'eau chaude passant en flux continu dans l'étage de saturation et de lavage à travers une tuyauterie verticale menant vers le bas.

5. Procédé selon la revendication 4, caractérisé en ce que le gaz chaud et l'eau chaude sont envoyée à un laveur à passage annulaire par l'intermédiaire de la tuyauterie verticale.

6. Procédé selon la revendication 1, caractérisé en ce que du l'eau épurée et froide est envoyée au dernier étage de refroidissement et de lavage (laveur à passage annulaire), et en ce que l'eau chaude de retour est évacuée de l'étage de lavage intermédiaire (laveur préliminaire à garnissage).

7. Procédé selon la revendication 6, caractérisé en ce que l'eau de lavage est envoyée à l'étage de refroidissement et de lavage intermédiaire après avoir traversé le dernier étage de refroidissement et de lavage.

8. Procédé selon la revendication 7, caractérisé en ce qu'une grande partie de l'eau amenée à l'étage de refroidissement et de lavage intermédiaire est, après avoir traversé ce dernier, envoyée au premier étage de saturation et de lavage.

9. Procédé selon les revendications 7 et 8, caractérisé en ce que, grâce à plusieurs utilisations, l'eau de lavage est préchauffée à au moins 10°C au-dessus de la valeur normale qui est de l'ordre de 60°C.

10. Dispositif destiné à la mise en oeuvre du procédé selon l'une quelconque des revendications 1 à 9, comportant un laveur à garnissage (30) disposé dans le parcours du gaz et un laveur à passage annulaire (32) en aval, caractérisé en ce qu'en amont du laveur préliminaire à garnissage (30), il est prévu une longue tuyauterie de saturation verticale (20) menant vers le bas, qui comporte un branchement (22) d'eau chaude raccordé à l'extrémité supérieure de la tuyauterie de saturation et un laveur à passage annulaire (18) disposé au niveau de l'extrémité inférieure da la tuyautarie de saturation (20), dont l'extrémité de sortie débouche au-dessous du garnissage du laveur à garnissage (30).

11. Dispositif selon la revendication 10, caractérisé en ce que deux séparateurs de gouttes (34, 36) sont branchés en série en aval du dernier étage de lavage (32).
